# EUROPÄISCHE PATENTSCHRIFT

(11) **EP 1 832 849 B1**
(45) Veröffentlichungstag und Bekanntmachung des Hinweises auf die Patenterteilung: **13.10.2010**
(21) Anmeldenummer: 07003472.3
(22) Anmeldetag: 20.02.2007
(51) Int. Cl.: G01C 22/00, G01C 22/02, B61L 25/02, G07C 5/00

(54) **Umdrehungszähler**
Revolution counter
Compte-tours

(30) Priorität: 09.03.2006 DE 102006011361
(43) Veröffentlichungstag der Anmeldung: 12.09.2007
(73) Patentinhaber: Lenord, Bauer & Co. GmbH, 46145 Oberhausen (DE)
(72) Erfinder: Stritzke, Burkhard, 45896 Gelsenkirchen (DE)
(74) Vertreter: Demski, Siegfried

(56) Entgegenhaltungen:
- EP-A- 1 227 018
- EP-A- 1 342 633
- GB-A- 2 386 422
- US-A- 5 524 034

## Beschreibung

Die Erfindung betrifft einen Umdrehungszähler, welcher in einer Wagenachse integriert ist und zur Erfassung der Laufleistung von Wagen, insbesondere von Güterwagen, vorgesehen ist, umfassend Mittel zur Erfassung der Achsumdrehungen in einem zweiteiligen Aufbau, in welchem ein Geber und ein Sensor mechanisch voneinander entkoppelt sind und ein explosionsgeschützter Aufbau, der eine Zündung von explosiven Stoffen/-Stoffgemischen in der Umgebung verhindert.

Zur Überwachung der Verkehrssicherheit von Wagen, insbesondere von Güterwagen ist es notwendig, die Laufleistung der in den Wagen verwendeten Räder und Achsen ständig zu überwachen. Durch die Überwachung soll sichergestellt werden, dass eine planmäßige Kontrolle des Materials zur Erhaltung der Verkehrssicherheit gewährleistet ist. In Abhängigkeit der Kilometerleistung eines Güterwagens ist es gegebenenfalls notwendig, die Radreifen zu erneuern oder auch die Lager einer Inspektion zu unterziehen, damit verschlissenes Material nicht Ursache von Unfällen wird. Erschwerend für eine planmäßige Überwachung der Laufleistung von Wagen ist die Tatsache, dass Radsätze im Einsatz gelegentlich ausgewechselt werden, wenn lediglich der Verdacht besteht, dass diese für den Weitertransport nicht mehr geeignet sind, Diese ausrangierten Radsätze lagern dann nicht selten für eine unbestimmte Zeit an Lagerorten, wo sie zunächst in Vergessenheit geraten und später, wenn diese Radsätze wieder erneut verwendet werden sollen, kann nicht nachvollzogen werden, welche Laufleistung diese Radreifen bereits aufweisen. In Folge dessen werden häufig Radsätze zu früh oder zu spät inspiziert, was nicht nur einen erheblichen Kostenaufwand erfordert, sondern auch abträglich für die Verkehrssicherheit ist. Wenn die Radreifen bei der erforderlichen, aber gegebenenfalls unnötigen Inspektion und Wartung abgedreht werden, bedeutet dies, dass die Lebensdauer eines solchen Radsatzes zudem verringert wird. Um die Verwaltung von Wagen mitsamt Radsätzen und Achsen zu vereinfachen, ist es daher notwendig, die tatsächliche Laufleistung von Wagen und deren Radsätze ständig zu überwachen und auch nach einem Ausbau und Lagerung festzustellen.

Nach dem bekannten Stand der Technik werden hierzu einfache Tachometer eingesetzt, welche die Umdrehungen der Achsen mit einem einfachen mechanischen Laufwerk zählen. Die Tachometer werden hierzu auf der Achse angebracht und sind frei drehbar gelagert. Durch ein exzentrisches Gewicht oder eine Fixierung wird erreicht, dass dieses Tachometer in einer festen rotatorischen Position verbleibt und die Radachse dreht sich um das freidrehbare Tachometer. Die Tachometer geraten im Einsatz zwar in Schwingung, zählen aber die Laufleistung der Achsen zuverlässig. Ein Nachteil dieser mechanischen Tachometer ist, dass diese ausschließlich durch Sichtkontakt abgelesen werden können, und außerdem sind diese mechanischen Laufwerke vergleichsweise empfindlich gegenüber Stoß, Korrosion und anderen Witterungseinflüssen.

Darüber hinaus haben sich auch elektronische Tachometer etabliert, welche mit Hilfe eines Magneten und einem REED-Relais, die Anzahl der Umdrehungen der Achsen zählen. Diese elektronischen Tachometer sind wesentlich kompakter herstellbar, als die mechanischen Tachometer, weisen jedoch den Nachteil auf, dass diese eine Batterie zur Stromversorgung benötigen. Gerade bei Güterwaggons, welche eine hohe Kilometerleistung aufweisen können, ist die dauerhafte Stromversorgung durch eine Batterie nicht immer gewährleistet und weitere Spannungsquellen stehen nicht zur Verfügung. Es kann durchaus vorkommen, dass ein Radsatz mehrere Jahre ohne entsprechende Kilometerleistung im Einsatz ist. Während dieser Zeit muss das Tachometer mit Strom versorgt werden, um weitere Umdrehungen der Achse sicher zu detektieren. Übersteigt die Einsatzzeit des Tachometers die Lebensdauer der Batterie, kommt es so zum unwiederbringlichen Datenverlust.

Aus der GB 2 386 422 A ist eine Anordnung zur Überwachung der Rotation von Wagenachsen bekannt. Erfindungsgemäß wird eine Anordnung verwendet, in welcher ein freilaufendes Gewicht innerhalb eines Gehäuses aufgehängt ist und durch die Schwerkraft bei der Rotation ortsfest verbleiben soll. Hingegen ist der Rest der Anordnung mit der Achswelle fest verbunden. In dieser Anordnung sind somit der Geber und der Sensor mechanisch miteinander gekoppelt.

Aus der DE 102 40 705 A1 ist ein Drehzahlmesssystem bekannt, das zur Winkelmessung bei ganz besonders geringen Rotationsfrequenzen geeignet ist. Hierzu wird der Abstand eines Sensors vom Geber gemessen und zeitlich in Bezug zu einer zweiten, späteren Messung gebracht. Aus der Steigung der so ermittelten Gerade wird die Rotationsfrequenz festgestellt.

Die DE 10 2006 005 597 A1 offenbart einen Laufleistungszähler für Radsätze. Der dort gelehrte Laufleistungszähler wird auf den Achsdeckel einer Achsenanordnung montiert und durch ein Loch in dem Achsdeckel wird eine Welle gegen das Zentrum der Welle gespannt, sodass diese Welle durch den Kraftschluss die Rotation der Welle erfasst.

EP-A-1 342 633 beschreibt einen an einer Wagenachse befestigten Umdrehungszähler. Der Umdrehungszähler besitzt Mittel zur Erfassung der Achsumdrehungen mit einem zweiteiligen Aufbau in einem abgedichteten Gehäuse. Der Umdrehungszähler weist darüber hinaus Mittel zum Auslesen der Anzahl der gespeicherten Achsumdrehungen, Mittel zur Speicherung von individuellen Wagendaten, sowie Mittel zur Energieerzeugung aus der Achsumdrehung auf.

Die bisher vorgestellten Lösungen aus dem Stand der Technik weisen den Nachteil auf, dass zur Auslesung der gezählten Umdrehungen ein Ablesen durch das Bedienpersonal notwendig ist. Andere Umdrehungszähler weisen mechanische Elemente auf, die verschleißanfällig sind. Wiederum andere Umdrehungszähler sind batteriegestützt und daher nicht langfristig einsetzbar.

Aufgabe der Erfindung ist es daher, einen Umdrehungszähler zur Verfügung zu stellen, der die Nachteile aus dem Stand der Technik überwindet. Vor allem soll der Umdrehungszähler den rauen Einsatzbedingungen des Bahnverkehrs standhalten.

Die erfindungsgemäße Aufgabe wird durch die Merkmale des Hauptanspruches gelöst. Weitere vorteilhafte Ausgestaltungen ergeben sich aus den Unteransprüchen.

Durch die Speicherung von weiteren individuellen Wagendaten ist es möglich, die abgelesenen Wagendaten mit einer Identifikationsnummer für den Radsatz zu verbinden. Gerade bei der Verwendung von einer größeren Anzahl von Radsätzen ist es hierdurch möglich, deren Laufleistung in einer Tabelle oder einer Datenbank zu verwalten und gegebenenfalls bei der Überschreitung einer Laufleistungshöchstgrenze den entsprechenden Radsatz zentral zu verwalten und auszutauschen. Die Mittel zur Speicherung der individuellen Wagendaten sollen sich aber nicht auf ein Festhalten der Wagen- beziehungsweise Radsatzdaten beschränken, sondern diese Daten sollen auch individuell veränderbar sein. Dies ist zum Beispiel dann notwendig, wenn eine Inspektion der Radsätze vorgenommen wurde. Hierdurch ist es möglich, auch die Instandhaltung dieser Radsätze und Wagen zu überprüfen und zu verfolgen, sodass auch der bisherige Einsatz eines Radsatzes oder eines Wagens leicht überprüft werden kann.

Es hat sich als vorteilhaft erwiesen, wenn die Mittel zur Erfassung der Achsumdrehungen berührungslos ausgestaltet sind, vorzugsweise mit Hilfe eines optischen und/oder magnetischen Gebers die Achsumdrehungen erfasst werden; besonders bevorzugt ist eine magnetische Achsumdrehungserfassung. Durch eine optische und/oder magnetische Erfassung der Achsumdrehungen ist es möglich, den Umdrehungszähler von der eigentlichen Achse mechanisch zu entkoppeln. Durch diese mechanische Entkopplung wird eine höhere Lebensdauer des Achsumdrehungszählers erreicht, da dieser von Vibrationen und Schlägen entkoppelt wird, welche sich auf den mechanischen oder elektronischen Aufbau des Zählers nachteilig auswirken können. Darüber hinaus hat sich eine berührungslose Zählung der Achsumdrehungen deshalb als vorteilhaft erwiesen, weil keine mechanischen Teile bewegt werden, wodurch der Achsumdrehungszähler selbst nicht gewartet zu werden braucht. Bei der Verwendung von optischen und/oder magnetischen Gebern können magneto-mechanische REED-Relais zum Einsatz kommen, es können Hall-Sonden zum Einsatz kommen, die durch einen vorbeiziehenden Magneten erregt werden, oder es können magnetoresistive Sensoren zum Einsatz kommen, welche in Abhängigkeit eines vorbeiziehenden Magnetfeldes ihren Widerstand ändern. Bei der Verwendung von magnetoresistiven Gebern haben sich verschiedene Gebertypen als vorteilhaft erwiesen. Diese sind beispielsweise AMR-Sensoren, GMR-Sensoren aber auch einfache MR-Sensoren. Alle magnetischen Sensoren werden hierbei durch ein sich zeitlich änderndes Magnetfeld erregt, wobei zur Erzeugung des veränderlichen Magnetfeldes ein Magnet auf die Stirnfläche oder auch auf die Umfangsfläche der zu überprüfenden Radachse angebracht wird. Ebenso ist es denkbar, den Sensor auf einem Magneten zu platzieren und eine unterbrochene Metallscheibe am Sensor vorbeizuführen. Durch die unterbrochene Geberscheibe wird der Magnetfluss durch den Sensor verändert, wodurch eine Änderung der elektronischen Eigenschaften des Sensors bewirkt wird. Dieser sich bei Rotation der Achse drehende Magnet oder die sich bewegende Geberscheibe erzeugt einen Wechsel des Magnetfeldes am Ort des Sensors, wobei jede Periode oder jedes Vielfache einer Periode eines Wechsels des Magnetfeldes einer Umdrehung entspricht.

Bei einem optischen Geber werden Kodierscheiben oder auch einfache Reflektoren genutzt, die ein optisches Signal, welches von einer Lichtquelle ausgesandt wird, erfassen und bei jedem Vorbeiziehen einer Reflektorscheibe oder einer Absorberscheibe wird ein Wechsel der Reflektion im optischen Sensor detektiert, sodass auch hier ein Zählimpuls zur Speicherung der Laufleistung eines Radsatzes beziehungsweise eines Wagens erfasst werden kann. Im folgenden werden unter magnetoresistiven Sensoren alle Sensoren verstanden, die einen nutzbaren Effekt bei einer Änderung eines Magnetfeldes aufweisen.

In einer weiteren vorteilhaften Ausgestaltung der Erfindung sind die Mittel zur Auslesung der gespeicherten Wagendaten berührungslos ausgestaltet. Die berührungslose Ausgestaltung wird durch die Übertragung der Daten durch ein optisches, magnetisches oder funktechnisches Signal erreicht. Durch berührungslose Mittel, beispielweise durch die Verwendung eines magnetischen Prinzips, entsteht der besondere Vorteil, dass Verschmutzungen, die bei der vorliegenden Anwendung sehr häufig auftreten, für die Auslesung der Daten keine Beeinträchtigung darstellen. Bei der optischen Übertragung, soweit möglich, werden Daten durch entsprechend modulierte Infrarot-Signale oder modulierte optische Signale in anderen Wellenlängenbereichen übertragen, sodass diese Daten durch eine weitere Vorrichtung zur Speicherung und/oder Analyse vorgehalten werden können. Auch bei einer magnetischen Übertragung ist es möglich, diese durch ein wechselndes Magnetfeld zu übertragen. Werden die Daten hingegen funktechnisch übertragen, so werden die Daten ebenfalls mit Hilfe eines wechselnden elektromagnetischen Feldes übertragen, aber mit Hilfe eines weiteren Signals moduliert, sodass hierdurch gegebenenfalls eine höhere Datenrate bei der Übertragung zu erreichen ist. Gegenüber einer nichtberührungslosen Ausgestaltung der Datenübertragung ergibt sich hierdurch der Vorteil, dass keine Stecker oder keine Kontakte vorgehalten werden müssen, welche im vergleichsweise rauen Einsatz der Wagen oder Radsätze verschmutzen oder korrodieren würden. Des Weiteren wird vermieden, dass zur Auslesung der Daten jeweils ein Kabel mit dem Achsumdrehungszähler verbunden werden müsste, wodurch eine Auslesung, gerade bei einer Vielzahl unterschiedlicher Radsätze, erheblich erschwert, zumindest aber verlangsamt wird.

Die Mittel zur berührungslosen Übertragung können dabei passiv und/oder aktiv ausgestaltet sein. Unter einer aktiven Ausgestaltung des Übertragungssystems wird ein System verstanden, dass durch eine eigene Energieversorgung die Daten selbsttätig an einen anderen Empfänger überträgt. Das hierbei verwendete Datenprotokoll ist zweitrangig, solange Daten moduliert oder unmoduliert von Umdrehungszähler an ein weiteres System übertragen werden. Unter einer passiven Ausgestaltung wird hingegen ein System verstanden, welches aus einem Signal eines Auslesegerätes so viel Energie entnimmt, dass dieses kurzeitig daraus Impulse generieren kann, mit deren Hilfe das Auslesegerät die Daten aus dem Umdrehungszähler ausliest. Die passive Ausgestaltung kommt in RFID-Chips zum Einsatz, wobei diese Chips durch ein äußeres hochfrequentes Magnetfeld erregt werden und diese magnetische Erregung wird in einer Spule im RFID-Chip in elektrische Energie gewandelt und steht zur Speicherung zur Verfügung. Entweder wird diese elektrische Energie dazu verwendet, einen Kondensator zu laden, der dem Schaltkreis zur Datenübertragung so-viel Energie zuführt, dass dieser selbsttätig die Daten übertragen kann oder es werden mit Hilfe der sich in der Spule befindlichen Energie Register eines Speichers ausgelesen, wobei in Abhängigkeit des Registerzustandes von 0 oder 1 ein Resonanzschwingkreis kurzgeschlossen oder geöffnet wird. Das auslesende System detektiert das Zusammenbrechen oder den Aufbau der Energieabsorption aus seinem eigenen Feld und ermittelt dadurch den Inhalt des Registers im RFID-Chip. Eine Datenübertragung durch dieses passive System ist immer dann problemlos möglich, wenn der aktive Datenempfänger und der passive RFID-Chip zur Auslesung nahe beieinander angeordnet sind. Diese passiven Auslesesysteme haben den Vorteil, dass keine eigene Energieversorgung benötiget wird, sondern lediglich durch einen Aufbau, bestehend aus mindestens einer Spule und entsprechender Elektronik auf unbestimmte Zeit gelagert werden können, wobei diese Systeme erst durch das Ablesen unter Energie gesetzt werden und dadurch ihren Registerstand einem Auslesegerät übermitteln.

In vorteilhafter Ausgestaltung der Erfindung ist der Umdrehungszähler so aufgebaut, dass dieser durch die Achsumdrehung selbst Energie gewinnt. Die Energiegewinnung kann durch einen einfachen Dynamo erreicht werden, wobei der Dynamo einen Kondensator oder Akkumulator lädt, der die fortwährend durch den Dynamo erzeugte Energie für eine gewisse Zeit speichert und dem System zur Verfügung stellt. Es ist aber auch möglich, anstatt eines vollwertigen Dynamos lediglich eine Spule zu verwenden, die sowohl zur Energieerzeugung verwendet wird als auch zur Detektion der Achsumdrehung. Hierbei wird durch einen vorbeilaufenden Magneten ein kurzer Impuls in der Spule erzeugt. Dieser Stromimpuls lädt einen Kondensator und hält so viel Energie vor, dass ein Mikrocontroller die Achsumdrehungen registriert und gegebenenfalls in Abhängigkeit von weiteren Betriebsparametern in einem nichtflüchtigen Speicher ablegt. Durch die Verwendung einer Spule, welche sowohl zur Energieerzeugung als auch zur Erfassung einer Achsumdrehung dient, ist es möglich, auf zwei unterschiedliche Aggregate innerhalb des Achsumdrehungszählers zu verzichten und diese in einer einzigen Einheit integriert anzuordnen. Hierdurch können die Kosten zum Aufbau des Achsumdrehungszählers reduziert werden, wodurch vor allem bei der Herstellung einer großen Anzahl der Umdrehungszähler ein großer wirtschaftlicher Vorteil entsteht. Darüber hinaus wird durch die doppelte Funktion der Energieerzeugungs- und Detektionsspule erreicht, dass der Umdrehungszähler sehr klein ausgestaltet werden kann. Dadurch kann der Achsumdrehungszähler auch in bestehende Systeme leicht eingebaut werden. Neben der Erzeugung von Energie durch die Achsumdrehung selbst ist es auch möglich, durch Solarzellen Energie zu erzeugen. Bei dieser optischen Energieerzeugung wird Licht aus der Umgebung dazu verwendet, ebenfalls einen Akkumulator zu laden, welcher die in ihm gespeicherte Energie dem Achsumdrehungszähler zur Verfügung stellt.

In einer weiteren vorteilhaften Ausgestaltung der Erfindung werden die erfassten Achsumdrehungen in Abhängigkeit weiterer Betriebsparameter im nichtflüchtigen Speicher des Umdrehungszählers abgelegt. Die weiteren Parameter bestimmen dabei den Bruchteil der Schreibzyklen für die erfassten Achsumdrehungen in Bezug auf jede Einzelumdrehung. Durch die Reduzierung der Schreibzyklen zur dauerhaften Speicherung der erfassten Daten wird erreicht, dass weniger Energie vom System aufgenommen werden muss, um die erfassten Achsumdrehungen im System dauerhaft zu speichern. Dabei kommen folgende Parameter zum Einsatz, welche bestimmen, wann die Anzahl der erfassten Achsumdrehungen in den nichtflüchtigen Speicher abgelegt werden können. Die positive Detektion eines Versorgungsspannungsabfalls, die Detektion der Unterschreitung einer Minimalgeschwindigkeit sowie der Ablauf einer vordefinierten Zeit und/oder die Erfassung einer vordefinierten Anzahl von Achsumdrehungen. Gerade dann, wenn der Wagen sehr langsam läuft, wird durch den langsam an der Spule verlaufenden Magneten eine nur geringe Energie erzeugt, sodass im Kondensator und/oder im Akkumulator zur Spannungsversorgung der Elektronik im Umdrehungszähler wenig Energie vorhanden ist. Sofern die Elektronik einen Abfall der Versorgungsspannung detektiert, verbleibt nur noch wenig Zeit, die nur temporär und flüchtig gespeicherten Achsumdrehungen in einem nichtflüchtigen Speicher abzulegen. In diesem Fall verbleibt der eingesetzten Elektronik eine nur noch geringe Restzeit bis zum totalen Zusammenbruch der Energieversorgung, um die ausgelesenen und nur flüchtig gespeicherten Daten im nichtflüchtigen Speicher abzulegen. Daher werden immer dann, wenn ein Versorgungsabfall detektiert wird, die Daten im dem nichtflüchtigen Speicher abgelegt.

Neben der Detektion eines Versorgungsspannungsabfalls kann die Detektion einer geringen Geschwindigkeit dazu verwendet werden, als Bedingung für das Ablegen der nur temporär und flüchtig gespeicherten Daten in den nichtflüchtigen Speichers zu dienen. Denn gerade bei einer geringen Geschwindigkeit des zu bemessenden Wagen ist zu erwarten, dass die Versorgungsspannung nicht im ausreichenden Maße zur Verfügung steht, sodass dann der nichtflüchtige Speicher vorsorglich häufiger beschrieben werden muss.

Darüber hinaus hat es sich auch als sehr vorteilhaft erwiesen, nach Ablauf einer vordefinierten Zeit die erfassten und nur flüchtig gespeicherten Achsumdrehungen in den nichtflüchtigen Speicher zu schreiben. Hierdurch wird gewährleistet, dass der nichtflüchtige Speicher so selten wie möglich mit den erfassten Achsumdrehungen beschrieben wird, um die Lebensdauer des nichtflüchtigen Speichers zu erhöhen. Der flüchtige Speicher, beispielsweise EEPROMS, verfügen nur über eine begrenzte Anzahl von Wiederbeschreibzyklen, innerhalb derer diese Zyklen verlässlich funktionieren. Deshalb ist es notwenig, die Anzahl der Schreibzyklen so gering wie möglich zu wählen. Außer der Wahl von Betriebszuständen wie Versorgungsspannungsabfall oder Ablauf einer vordefinierten Zeit ist es auch möglich, nur einen Bruchteil der erfassten Achsumdrehungen in den nicht flüchtigen Speicher hinein zu schreiben. Beispielsweise ist es so möglich, erst bei einer bestimmten Anzahl gezählter Umdrehungen, beispielsweise nach je 100 oder nach je 1000 Umdrehungen, den Zähler um entsprechend um 100 oder 1000 gezählten Achsumdrehungen zu inkrementieren und diesen Zählerstand dann in das EEPROM hinein zu schreiben.

In einer weiteren vorteilhaften Ausgestaltung der Erfindung werden die Daten beim Auslesen verschlüsselt. Die Verschlüsselung hat den Vorteil, dass nur befugtes Personal dazu in der Lage ist, die Wagenlaufleistung beziehungsweise die Radlaufleistung auszulesen. Darüber hinaus hat das Auslesen unter Verschlüsselung auch den Vorteil dass gegebenenfalls unbefugtes Programmieren durch unbefugtes Personal nicht möglich ist. Hierdurch wird beispielsweise gewährleistet, dass eine missbräuchliche Reprogrammierung der Umdrehungszähler vermieden wird, um vorsätzlich einem Wagen oder einem Radsatz fälschlicherweise als neu zu markieren, obwohl dieser tatsächlich eine sehr hohe Laufleistung aufweist und somit eine Verkehrsgefährdung darstellt. Darüber hinaus wirkt eine Verschlüsselung auch als Diebstahlschutz, da der Umdrehungszähler ohne den erforderlichen Schlüssel zur Dechiffrierung der Kommunikation nicht verwendet werden kann.

In vorteilhafter Ausgestaltung ist vorgesehen, dass die im Achsumdrehungszähler enthaltenen Daten von außen individuell nachprogrammiert werden können. Es ist dann von Vorteil, wenn der betreffende Radsatz beziehungsweise der betreffende Wagen inspiziert und gegebenenfalls in Stand gesetzt wird und diese Inspektion oder Instandhaltung in dem Datensatz vermerkt wird. Beispielsweise kann im Datensatz, das Datum der letzten Inspektion, das Datum der letzten Instandhaltung und gegebenenfalls auch ein Kürzel vermerkt werden, welches für den Umfang der letzten Inspektion stehen. Solche Informationen können, das Datum des letzten Wechsels eines Radreifens oder das Datum der Abschmierung oder Wechsel der Lager sein, wie auch das Datum der letzten Abdrehung des Radreifens.

Außer der Verschlüsselung der Daten beim Auslesen und beim Programmieren ist vorgesehen, dass vor der Auslesung beziehungsweise vor der Programmierung eine Authentifizierung vorgesehen ist. Diese Authentifizierung kann durch Austausch eines Schlüssels oder aber durch eine sogenannte "Challenge-Response"-Authentifizierung vorgenommen werden. Bei einer "Challenge-Response"-Verschlüsselung, vergibt zumindest einer des Sender/Empfängerpaares eine vom Kommunikationspartner zu verschlüsselnde Zeichenkette, die dann von dem Kommunikationspartner ver- oder entschlüsselt und zurück gesendet wird. Hierdurch wird gewährleistet, dass beide Kommunikationspartner, sowohl Sender wie auch Empfänger über denselben Schlüssel zur Ent- beziehungsweise Verschlüsselung verfügen, wobei dieser Ent- oder Verschlüsselungscode nicht in der Kommunikation zwischen Sender und Empfänger verwendet wird. Somit kann dieser Schlüssel nicht missbräuchlich durch unbefugtes Personal durch Mitschnitt der Kommunikation ermittelt werden.

In einer weiteren vorteilhaften Ausgestaltung der Erfindung ist der Umdrehungszähler explosionsgeschützt aufgebaut. Dies bedeutet, dass die gesamte Elektronik stabil gegenüber Lösemitteln und Gasen verkapselt ist, sodass weder Gas noch Lösemittel in das Innere des Umdrehungszählers gelangen können. Dadurch wird verhindert, dass die Elektronik ein gegebenenfalls explosives Gemisch aus Lösemittel und/oder Gasen zünden kann, welches möglicherweise durch Unfall in der Umgebung des Achsumdrehungszählers austritt. Dies ist besonders dann wichtig, wenn gefährliche Güter verladen werden beziehungsweise wenn es zu einem Unfall mit gefährlichen Gütern gekommen ist, sodass diese Elektronik nicht als ungewollte Zündquelle für die Gefahrgüter dient.

In einer weiteren vorteilhaften Ausgestaltung der Erfindung ist außerdem ein Temperatursensor vorgesehen. Der Temperatursensor erfasst darüber hinaus noch die jeweils höchste Temperatur der Achse, sodass aus der Temperatur nachträglich entnommen werden kann, dass die Achse beziehungsweise das Lager der Achse heiß gelaufen ist.

Das gesamte System zur Messung und Zählung der Achsumdrehungen eines Wagen beziehungsweise eines Radsatzes besteht aus einer mobilen Sende- und Empfangseinrichtung und einer Vielzahl, zumindest aber einem Achsumdrehungszähler selbst, wobei je ein Umdrehungszähler an einem Radsatz montiert ist. Die Achsumdrehungszähler funktionieren unabhängig von der mobilen Sende- und Empfangseinrichtung und können jahrelang im Einsatz sein, wobei die Auslesung durch die mobilen Sende- und Empfangseinrichtung initiiert wird. Dazu wird die mobile Sende- und Empfangseinrichtung in die Nähe des Radsatzes mit Achsumdrehungszähler gehalten, und die mobile Sende- und Empfangseinrichtung wird bei einer passiven Ausführung der Achsumdrehungszähler dazu veranlasst, eine Radiofrequenz auszusenden, welche die Auslesung der Daten startet. Diese Radiofrequenz wird von Achsumdrehungszähler empfangen und erzeugt in einer Spule des Achsumdrehungszählers eine Versorgungsspannung, die dazu führt, dass eine Ausleseelektronik aktiviert wird. Diese Ausleseelektronik übermittelt dann die Werte des Registers im nichtflüchtigen Speicher, welche dann von der mobilen Sende- und Empfangseinrichtung erfasst werden. Hierdurch ist es möglich, dass die mobile Sende- und Empfangseinrichtung eine Vielzahl unterschiedlicher Radsätze anhand einer im Achsumdrehungszähler gespeicherten Identifikationsnummer identifiziert und dieser Identifikationsnummer werden die ausgelesene Laufleistung und gegebenenfalls weitere Daten wie letzte l'nstandhaltungsarbeiten öder planmäßige Erhaltungsarbeiten zugeordnet.

Personal, welches die Laufleistung von Wagen beziehungsweise Radsätzen ermittelt, kann auf diese Weise an einem langen Güterzug vorbei laufen und im Vorbeigehen die Daten der einzelnen Radsätze erfassen. Es ist vorgesehen, dass die mobile Sende-und Empfangseinrichtung diese Daten spater an eine weitere Vorrichtung, die eine Datenbank unterhält, übermittelt. Auf diese Weise können eine große Anzahl verschiedener Radsätze verwaltet werden. Darüber hinaus kann die Datenbankvorrichtung statistische Daten ermitteln und daraus ableiten, wann planmäßige Materialerhaltungsarbeiten notwendig sind, beziehungsweise solche Radsätze identifizieren, die dringend ausgetauscht werden müssen. Auf diese Weise wird verhindert, dass Radsätze nicht unnötig häufig einer Inspektion unterzogen werden müssen, sodass die Kosten für den Unterhalt von Radsätzen minimiert werden können.

Außer einer mobilen Sende- und Empfangseinrichtung, die durch Personal an einzelnen Radsätzen der zu erfassenden Wagen vorbeigeführt werden muss, ist es auch möglich, dass die Wagen an einer stationären Erfassungseinheit vorbei fahren, wobei die stationäre Erfassungseinheit die Daten der einzelnen Achsumdrehungszähler einzeln oder konzertiert erfasst.

In konkreter Ausgestaltung der Erfindung ist ein erfindungsgemäßer Achsumdrehungszähler vorgesehen, der etwa die 5-8 cm groß ist. In diesem zylinderartigen Achsumdrehungszähler ist die zumindest eine Spule untergebracht, die zur Detektion der Achsumdrehung und zur Spannungsversorgung der Einheit dient, und gegebenenfalls auch eine weitere Spule, die zur Kommunikation mit einer mobilen Sende- und Empfangseinrichtung dient. Neben den Spulen umfasst der Achsumdrehungszähler auch noch die notwendige Elektronik, welche die Daten erfasst, die Daten speichert und in welcher Mittel vorhanden sind, die Daten auf ein weiteres Gerät zu übertragen.
Dieser Achsumdrehungszähler weist eine Montagefläche auf, die es ermöglicht, diesen Umdrehungszähler von außen auf eine Achsenlagerverschlusskappe eines Radsatzes anzubringen. Hierzu wird bei der Nachrüstung von vorhandenen Radsätzen die Achsenlagerverschlusskappe aufgebohrt, und in die Bohrung wird der erfidungsgemäße Achsumdrehungszähler eingefügt, dabei wird der Achsumdrehungszähler mit einer Befestigungsvorrichtung von außen auf der Achsenlagerverschlusskappe befestigt. Die Befestigung kann durch Nieten oder durch Schrauben vorgenommen werden. Innerhalb der Achsenlagerverschlusskappe wird ein Permanentmagnet exzentrisch auf die Stirnseite einer fortlaufenden Radachse angeordnet. Bei der Umdrehung der Radachse wird der exzentrisch angeordnete Permanentmagnet an dem Achsumdrehungszähler vorbei geführt, wobei das Vorbeiführen des Permanentmagneten einerseits eine Spannung in der Energieversorgungsspule des Achsumdrehungszähler erzeugt, welche zur kurzfristigen Spannungsversorgung der Elektronik im Achsumdrehungszähler dient und gleichzeitig wird durch die Umdrehung ein Impuls in den Achsumdrehungszähler erzeugt, der für die Zählung der Achsumdrehungen dient. Dabei kann auf die oben beschriebenen Verfahren zurückgegriffen werden, die Schreibzyklen für eine Speicherung der erfassten Umdrehungen auf eine möglichst geringe Anzahl zu reduzieren, um die Lebensdauer der nichtflüchtigen Speichereinheit zu verlängern.

Die Erfindung wird im Weiteren anhand der Figuren näher erläutert.

Es zeigt
- Fig. 1: eine Schnittzeichnung durch ein erfindungsgemäßen Umdrehungszähler und
- Fig. 2: einen Umdrehungszähler im eingebauten Zustand in einer Achskappe, wobei die Achskappe teilweise durchbrochen ist, um die Position von Magnet und Umdrehungszähler deutlich darzustellen.

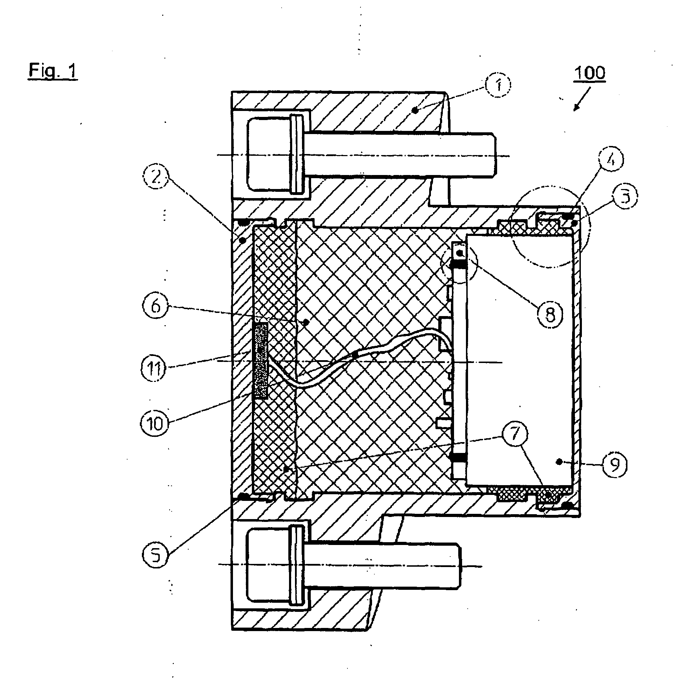

In Figur 1 ist ein erfindungsgemäßer Umdrehungszähler 100 abgebildet, der aus einem Gehäuse 1 und einem ersten nach außen weisenden Sensordeckel 2 und einem zweiten nach innen weisenden Sensordeckel 3 besteht. Das Innere des Umdrehungszählers 100 ist durch O-Ringe 4, 5 gegenüber der äußeren Atmosphäre abgedichtet. Hohlräume des Umdrehungszählers 100 werden durch Vergussmasse 6, 7 ausgefüllt, sodass der gesamte Umdrehungszähler 100 frei von Gasvolumina ist, in welchen gegebenenfalls explosionsgefährliche Stoffe eindringen können. Die erforderliche Elektronik zur Aufnahme der Mittel zur Speicherung der erfassten Umdrehungen befindet sich auf einer Leiterplatte 8, welche rückseitig auf einer Spule 9 angeordnet ist, die sowohl zur Erfassung der Umdrehungen wie auch zur Erzeugung von Energie in dem nach innen weisenden Teil des Umdrehungszählers 100 angeordnet ist. Dabei ist die Spule 9 für eine möglichst nahe Platzierung zu einem hier nicht gezeigten vorbeiziehenden Magnet direkt unterhalb des nach innen weisenden Sensordeckels 3 angeordnet. Ober eine Leitung 10 ist die Elektronik auf der Leiterplatte 8 mit einer RFID-Einheit 11 verbunden, wobei die RFID-Einheit 11 an dem nach außen weisenden Sensordeckel 2 angeordnet ist.

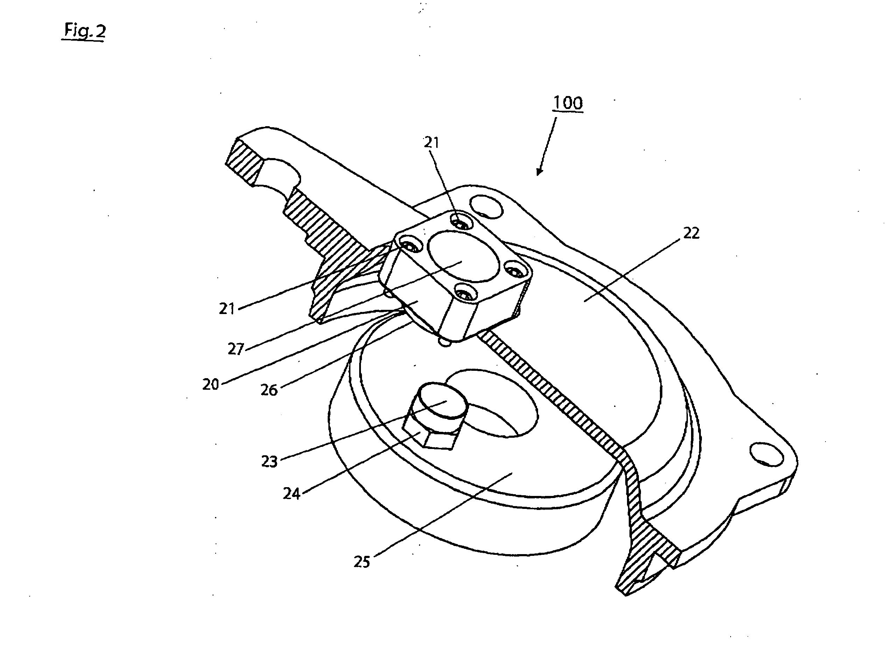

In Figur 2 ist der erfindungsgemäße Umdrehungszähler 100 gemäß Figur 1 in eingebautem Zustand dargestellt. Der Umdrehungszähler 100 ist so in die Achse eines Wagens integriert, dass das Gehäuse 20 mit Hilfe von Befestigungselementen 21 im Wesentlichen auf der Außenseite eines Achsdeckels 22 angebracht ist. Dabei ragt ein Teil des Gehäuses 20 durch eine Bohrung im Achsdeckel 22. Im eingebauten Zustand ist das Gehäuse 20 des erfindungsgemäßen Umdrehungszählers 100 stationär in die Achse eines Wagens integriert. Hingegen befindet sich ein Magnet 23, der mit Hilfe eines Befestigungselementes 24 auf der Stirnseite einer Achse 25 angeordnet ist, außermittig zur Wagenachse, sodass dieser Magnet 23 bei jeder Umdrehung der Achse 25 an dem Umdrehungszähler 100 vorbeizieht und eine Detektion ermöglicht. Bei jedem Vorbeiziehen des Magnets 23 an dem nach innen weisenden Sensordeckels 26 wird in der Spule 9 gemäß Figur 1 eine Spannung induziert, wobei diese Spannung sowohl dazu verwendet wird, genügend Energie für die Elektronik auf Leiterplatte 8 gemäß Figur 1 zu erzeugen und um eine Achsrotation der Achse 25 zu detektieren. Auf der Außenseite des Gehäuses 20 ist ein Sensordeckel 27 angeordnet, hinter den sich eine RFID-Einheit 11 gemäß Figur 1 befindet. Bei vorgesehenen Betrieb des Umdrehungszählers 100 ist vorgesehen, dass dieser unabhängig von externen Einheiten selbstständig die Umdrehung der Achse 25 erfasst. Soll die Anzahl der Achsumdrehungen von Achse 25 ausgelesen werden, so wird mit einem hier nicht gezeigten weiteren mobilen Gerät die Anzahl der Achsumdrehungen aus den erfindungsgemäßen Umdrehungszähler 100 ausgelesen. Dabei wird die mobile Einheit in die Nähe des nach außen weisenden Sensordeckels 27 gehalten, wobei eine Elektronik im mobilen Erfassungsgerät die Spule der RFID-Einheit 11 erregt. Die RFID-Einheit 11 hat somit genügend Energie zur Verfügung, die Daten aus der Elektronik auf Leiterplatte 8 gemäß Figur 1 an die mobile Erfassungseinheit zu übertragen.

### Bezugszeichenliste

- 1: Gehäuse
- 2: Sensordeckel
- 3: Sensordeckel
- 4: O-Ring
- 5: O-Ring
- 6: Vergussmasse
- 7: Vergussmasse
- 8: Leiterplatte
- 9: Spule
- 10: Leitung
- 11: RFID-Einheit

- 20: Gehäuse
- 21: Befestigungselement
- 22: Achsdeckel
- 23: Magnet
- 24: Befestigungselement
- 25: Achse
- 26: Sensordeckel
- 27: Sensordeckel

- 100: Umdrehungszähler

## Patentansprüche

1. Umdrehungszähler (100), welcher in einer Wagenachse integriert ist und zur Erfassung der Laufleistung von Wagen, insbesondere von Güterwagen, vorgesehen ist, umfassend Mittel (9,23) zur Speicherung der Anzahl der Achsumdrehungen, Mittel zum Auslesen der Anzahl der gespeicherten Achsumdrehungen (11) und Mittel zur Speicherung von weiteren individuellen Wagendaten, um diese bei Abruf bereitzustellen, sowie Mittel (9, 23) zur Energieerzeugung, bevorzugt Mittel zur Energieerzeugung aus der Achsumdrehung und/oder Energieerzeugung durch Licht,
**dadurch gekennzeichnet,**
**dass** Mittel zur Erfassung der Achsumdrehungen in einem zweiteiligen, mechanisch voneinander entkoppelten Aufbau vorhanden sind, wobei ein Geber exzentrisch auf einer Radachse und ein Sensor mit einem explosionsgeschützten Aufbau in einem Gehäuse (20) auf der Außenseite eines Achsdeckels (22) angeordnet ist, wodurch eine Zündung von explosiven Stoffen- oder Stoffgemischen in der Umgebung verhinderbar ist.

2. Umdrehungszähler nach Anspruch 1,
**dadurch gekennzeichnet,**
**dass** Mittel zur automatischen Auslesung (11) aller gespeicherten Daten vorhanden sind.

3. Umdrehungszähler nach Anspruch 1 oder 2,
**dadurch gekennzeichnet,**
**dass** die Mittel (9, 23) zur Erfassung der Achsumdrehungen berührungslos ausgestaltet sind, vorzugsweise mit Hilfe eines optischen und/oder magnetischen Gebers die Achsumdrehung erfassen, besonders bevorzugt magnetisch die Achsumdrehung erfassen und/oder dass die Mittel (23) zur Erfassung der Achsumdrehung einen magneto-resistiven Sensor aufweisen.

4. Umdrehungszähler nach einem der Ansprüche 2 bis 3,
**dadurch gekennzeichnet,**
**dass** die Mittel (11) zur Auslesung der gespeicherten Wagendaten berührungslos ausgestaltet sind, und vorzugsweise optisch und/oder elektromagnetisch die gespeicherten Daten übertragen, besonders bevorzugt über eine Funkeinrichtung die Daten übertragen, und/oder dass die Mittel (11) zur Auslesung der gespeicherten Wagendaten passiv und/oder aktiv ausgestaltet sind und/oder dass die Mittel (11) zur Auslesung der gespeicherten Wagendaten als RFID-Modul ausgestaltet sind.

5. Umdrehungszähler nach Anspruch 1 bis 4,
**dadurch gekennzeichnet,**
**dass** Mittel zur Speicherung der erzeugten Energie vorhanden sind, bevorzugt Kondensatoren und/oder Akkumulatoren vorhanden sind.

6. Umdrehungszähler nach einem der Ansprüche 1 bis 5,
**dadurch gekennzeichnet,**
**dass** die Mittel zur Erfassung der Achsumdrehung einen vordefinierten Bruchteil der erfassten Achsumdrehungen an die Mittel zur Speicherung weiterleiten.

7. Umdrehungszähler nach einem der Ansprüche 1 bis 6,
**dadurch gekennzeichnet,**
**dass** die Mittel zur Erfassung der Achsumdrehung bei vordefinierten Betriebszuständen die erfassten Umdrehungen an die Mittel zur Speicherung weiterleiten, bevorzugt bei Detektion eines Versorgungsspannungsabfalls, bei Unterschreiten einer Minimalgeschwindigkeit, nach Ablauf einer vordefinierten Zeit und/oder nach Erfassung einer definierten Zahl von Achsumdrehungen.

8. Umdrehungszähler nach einem der Ansprüche 1 bis 7,
**dadurch gekennzeichnet,**
**dass** Mittel vorhanden sind, welche bei Auslesung die gespeicherten Wagendaten verschlüsseln, und/oder dass Mittel vorhanden sind, welche eine Programmierung der individuellen Wagendaten von außen ermöglichen, und/oder dass Mittel vorhanden sind, welche eine Authentifizierung vor der Auslesung und/oder der Programmierung erfordern.

9. Umdrehungszähler nach einem der Ansprüche 1 bis 8,
**dadurch gekennzeichnet,**
**dass** Mittel zur Zeitmessung vorhanden sind und/oder dass Mittel zur Temperaturmessung vorhanden sind.

10. System aus Umdrehungszähler nach einem der Ansprüche 1 bis 9 und einer Vorrichtung zum Auslesen der Wagendaten.

11. System nach Anspruch 10,
**dadurch gekennzeichnet,**
**dass** die Vorrichtung zum Auslesen der Wagendaten für eine mobile Handhabung geeignet ist und/oder dass in der Vorrichtung zum Auslesen eine Datenbank zur Speicherung mehrerer individueller Wagendaten von verschiedenen Umdrehungszählern vorhanden ist.

12. System nach einem der Ansprüche 10 bis 11,
**dadurch gekennzeichnet,**
**dass** in der Vorrichtung zum Auslesen Mittel zur Übertragung der ausgelesenen Daten in ein weiteres System vorhanden sind.

13. Verfahren zur Überwachung der Laufleistung von Wagen, insbesondere Güterwagen, in welchem ein System nach einem der Ansprüche 10 bis 12 eingesetzt wird, wobei die Umdrehungszähler alle Wagendaten automatisch speichern und die erfassten Achsumdrehungen fortlaufend aktualisieren, und nach Anfrage durch eine Vorrichtung zum Auslesen der Wagendaten diese Daten an die Vorrichtung übermitteln.

14. Verfahren nach Anspruch 13, wobei die in der Vorrichtung zum Auslesen gesammelten Daten an ein weiteres System übertragen werden.

## Claims

1. Revolution counter (100) which is integrated in a car axle and provided for detecting the kilometrage of cars, in particular goods wagons, comprising means (9, 23) for storing the number of axle revolutions, means for reading out the number of the stored axle revolutions (11), and means for storing further individual car data to provide them on call, as well as means (9, 23) for generating energy, preferably means for generating energy from the axle revolution and/or generating energy by light,
**characterized in that**
means for detecting the axle revolutions are present in a two-piece, mechanically decoupled structure, wherein a transducer is eccentrically arranged on a wheel axle and a sensor with an explosion protected structure is arranged in a housing (20) on the outer side of an axle cover (22), whereby ignition of explosive substances or mixtures of substances in the surrounding area can be prevented.

2. Revolution counter according to claim 1,
**characterized in that**
means for automatically reading out (11) all stored data are present.

3. Revolution counter according to claim 1 or 2,
**characterized in that**
the means (9, 23) for detecting the axle revolutions are embodied to be contactless, preferably detect the axle revolution with the aid of an optical and/or magnetic transducer, particularly preferably detect the axle revolution magnetically, and/or the means (23) for detecting the axle revolution comprise a magnetoresistive sensor.

4. Revolution counter according to one of claims 2 to 3,
**characterized in that**
the means (11) for reading out the stored car data are embodied to be contactless, and preferably transmit the stored data optically and/or electromagnetically, particularly preferred transmit the data via a radio device, and/or the means (11) for reading out the stored car data are embodied to be passive and/or active, and/or the means (11) for reading out the stored car data are embodied as RFID module.

5. Revolution counter according to claims 1 to 4
**characterized in that**
means for storing the generated energy are present, preferably capacitors and/or accumulators are present.

6. Revolution counter according to one of claims 1 to 5,
**characterized in that**
the means for detecting the axle revolution forward a predefined fraction of the detected axle revolutions to the storage means.

7. Revolution counter according to one of claims 1 to 6,
**characterized in that**
the means for detecting the axle revolution forward the detected revolutions to the storage means in predefined operating states, preferably if a supply voltage drop is detected, if a minimum speed is not reached, after a predefined time has lapsed, and/or after a defined number of axle revolutions has been detected.

8. Revolution counter according to one of claims 1 to 7,
**characterized in that**
means are present which encode the stored car data when they are read out, and/or means are present which permit programming of the individual car data from outside, and/or means are present which require authentication before reading out and/or programming.

9. Revolution counter according to one of claims 1 to 8,
**characterized in that**
means for time measurement are present and/or means for temperature measurement are present.

10. System of revolution counter according to one of claims 1 to 9 and of a device for reading out the car data.

11. System according to claim 10,
**characterized in that**
the device for reading out the car data is suited for mobile handling, and/or a data base for storing several individual car data of various revolution counters is present in the read-out device.

12. System according to one of claims 10 to 11,
**characterized in that**
means for transmitting the read-out data to a further system are present in the read-out device.

13. Method for monitoring the kilometrage of cars, in particular goods wagons, in which a system according to one of claims 10 to 12 is employed, wherein the revolution counters automatically store all car data and continuously update the detected axle revolutions, and, upon request from a device for reading out the car data, transmit the same to the device.

14. Method according to claim 13, wherein the data collected in the device for reading them out are transmitted to a further system.

## Revendications

1. Compte-tours (100) lequel est intégré dans un essieu de wagon et qui est prévu pour enregistrer le kilométrage parcouru par des wagons, en particulier par des wagons de marchandises, comprenant des moyens (9, 23) destinés à l'enregistrement du nombre de rotations d'essieu, des moyens destinés à la lecture du nombre de rotations d'essieu enregistrées (11) et des moyens destinés à l'enregistrement d'autres données individuelles relatives aux wagons afin de les mettre à disposition en cas d'interrogation ainsi que des moyens (9, 23) destinés à la production d'énergie, préférentiellement des moyens destinés à la production d'énergie provenant de la rotation d'essieu et/ou à la production d'énergie par la lumière, **caractérisé par le fait que** des moyens destinés à l'enregistrement des rotations d'essieu sont présents dans une structure en deux parties, découplées mécaniquement l'une par rapport à l'autre, un transmetteur étant disposé de manière excentrée sur un essieu et un capteur doté d'une structure à protection antidéflagrante dans un boîtier (20) sur la face extérieure d'un couvercle d'essieu (22), permettant d'éviter un allumage de matières explosives ou de mélanges de matières dans l'environnement.

2. Compte-tours selon la revendication 1 à 4, **caractérisé par le fait que** des moyens destinés à la lecture automatique (11) de toutes les données sont présents.

3. Compte-tours selon la revendication 1 ou 2, **caractérisé par le fait que** les moyens (9, 23) destinés à l'enregistrement des rotations d'essieu sont conçus sans contact, enregistrent la rotation d'essieu préférentiellement à l'aide d'un transmetteur optique et/ou magnétique, enregistrent la rotation d'essieu de préférence particulièrement de manière magnétique et/ou que les moyens (23) destinés à la rotation d'essieu présentent un capteur magnéto-résistant.

4. Compte-tours selon l'une des revendications 2 à 3, **caractérisé par le fait que** les moyens (11) destinés à la lecture des données enregistrées relatives aux wagons sont conçus sans contact et transmettent les données enregistrées préférentiellement de manière optique et/ou électromagnétique, transmettent les données de très préférentiellement par l'intermédiaire d'un dispositif radio et/ou que les moyens (11) destinés à la lecture des données enregistrées relatives aux wagons sont conçus de manière passive et/ou active et/ou que les moyens (11) destinés à la lecture des données enregistrées relatives aux wagons sont conçus sous forme de module RFID.

5. Compte-tours selon la revendication 1 à 4, **caractérisé par le fait que** des moyens destinés au stockage de l'énergie produite sont présents, que préférentiellement des condensateurs et/ou des accumulateurs sont présents.

6. Compte-tours selon l'une des revendications 1 à 5,**caractérisé par le fait que** les moyens destinés à détection de la rotation d'essieu transmettent une fraction prédéfinie des rotations d'essieu détectées aux moyens destinés à l'enregistrement.

7. Compte-tours selon l'une des revendications 1 à 8, **caractérisé par le fait que** les moyens destinés à la détection de la rotation d'essieu lors d'états de fonctionnement prédéfinis transmettent les rotations détectées aux moyens destinés à l'enregistrement, préférentiellement en cas de détection d'une chute de tension d'alimentation, en cas de dépassement vers le bas d'une vitesse minimum, au-delà d'une période prédéfinie et/ou après détection d'un nombre défini de rotations d'essieu.

8. Compte-tours selon l'une des revendications 1 à 7, **caractérisé par le fait que** des moyens sont présents, qui cryptent les données enregistrées relatives aux wagons, et/ou que des moyens sont présents, qui permettent une programmation par l'extérieur des données individuelles relatives aux wagons, et/ou que des moyens nécessitant une authentification avant la lecture et/ou la programmation sont prévus.

9. Compte-tours selon l'une des revendications 1 à 8, **caractérisé par le fait que** des moyens destinés à la mesure du temps sont présents et/ou que des moyens destinés à la mesure de température sont présents.

10. Système constitué d'un compte-tours selon l'une des revendications 1 à 9 et d'un dispositif destiné à la lecture des données relatives aux wagons.

11. Système selon la revendication 10, **caractérisé par le fait que** le dispositif de lecture des données relatives aux wagons est adapté à une manipulation mobile et/ou que dans le dispositif destiné à la lecture d'une banque de données destinée à l'enregistrement de plusieurs données individuelles relatives aux wagons de différents compte-tours est présente.

12. Système selon l'une des revendications 10 à 11, **caractérisé par le fait que** des moyens destinés à transmettre les données lues dans un autre système sont présents dans le dispositif destiné à la lecture.

13. Procédé destiné à la surveillance du kilométrage de wagons, en particulier de wagons de marchandises, dans lequel un système est utilisé selon l'une des revendications 10 à 12, les compte-tours enregistrant automatiquement toutes les données relatives aux wagons et actualisant en continu les rotations d'essieu, et transmettant ces données au dispositif après requête par un dispositif de lecture des données relatives aux wagons.

14. Procédé selon la revendication 13, les données collectées dans le dispositif de lecture sont transmises à un autre système.
